# EUROPÄISCHE PATENTANMELDUNG

(11) **EP 3 792 169 A1**
(43) Veröffentlichungstag der Anmeldung: **17.03.2021**
(21) Anmeldenummer: 20194361.0
(22) Anmeldetag: 03.09.2020
(51) Int. Cl.: B62J 45/422, B62J 45/20, B62J 45/41, B62J 50/22, B62K 3/00, B62K 21/12, B62K 21/26

(54) **SYSTEM ZUR SITZPOSITIONSBESTIMMUNG**

(30) Priorität: 11.09.2019 DE 202019105015 U
(71) Anmelder: Canyon Bicycles GmbH, 56073 Koblenz (DE)
(72) Erfinder: Huth, Oliver, 61549 Worms (DE); Christophersen, Christoph, 22459 Hamburg (DE); Zom, Jonathan, 22087 Hamburg (DE)
(74) Vertreter: dompatent von Kreisler Selting Werner - Partnerschaft von Patent- und Rechtsanwälten mbB

(57) **Zusammenfassung**

Ein System zur Sitzpositionsbestimmung eines Fahrradfahrers weist zwei mit Fahrradlenkerelementen verbundene Drucksensoren (10, 12) auf. Die Drucksensoren (10, 12) sind über Datenübertragungseinrichtungen (14, 16) mit einer Auswerteeinrichtung (18), wie einem Fahrradcomputer, verbunden. Durch die Echtzeitübertragung können die generierten Daten direkt konsumiert und in Indoor-Training-Software für ein realitätsnahes Trainingserlebnis integriert werden. Mit Hilfe der Auswerteeinrichtung erfolgt ein Auswerten der von den Drucksensoren (10, 12) ermittelten Daten und ggf. in Abhängigkeit weiterer Parameter ein Bestimmen der Sitzposition.

## Beschreibung

Die Erfindung betrifft ein System zur Sitzpositionsbestimmung eines Fahrradfahrers.

Insbesondere beim sportlichen Fahrradfahren hat der Luftwiderstand einen großen Einfluss auf die Geschwindigkeit. Etwa 80% des Luftwiderstandes gehen hierbei auf den Fahrer selbst und nur 20% auf das Fahrrad zurück. Des Weiteren ist zu berücksichtigen, dass der Luftwiderstand der größte Einflussfaktor, bezogen auf den Wirkungsgrad, der vom Fahrer auf die Pedale übertragene Leistung ist. Daher nehmen die Fahrer beim Rennradsport und im Triathlon auf Mittel- und Langdistanzen eine sogenannte Aeroposition ein, in der die Körperhaltung des Fahrers möglichst aerodynamisch ist. Beim Rennradfahren greift der Fahrer in der Aeroposition den Unterlenker des Rennradlenkers, das heißt das gebogene untere Teil des Rennradlenkers, sodass der Oberkörper eine möglichst geringe Luftangriffsfläche, bzw. Widerstandsfläche bietet. Die Aeroposition bei einem Zeitfahrrad, die insbesondere beim Rennradsport und beim Triathlon verwendet werden besteht darin, dass bei Triathlonlenkern die Unterarme auf ein Auflageelement, die sogenannten Armpads gelegt werden.

Das Einhalten der Aeroposition muss trainiert werden. Dies erfolgt heute nur durch Beobachtung des Sportlers durch seinen Trainer. Auch beim Indoor-Training, beispielsweise auf Rollentrainern, erfolgt eine Beobachtung der korrekten Aeroposition nur durch den Trainer.

Aufgabe der Erfindung ist es, ein System zur Sitzpositionsbestimmung eines Fahrradfahrers zu schaffen, mit dem insbesondere die Aeroposition erfasst und ausgewertet werden kann.

Die Lösung der Aufgabe erfolgt erfindungsgemäß durch ein System zur Sitzpositionsbestimmung mit den Merkmalen des Anspruchs 1.

Das erfindungsgemäße System zur Sitzpositionsbestimmung eines Fahrradfahrers weist zwei, insbesondere als Drucksensoren ausgebildete Sensoren auf, die an einem Fahrradlenkerelement angeordnet sind. Gegebenenfalls können zusätzliche Sensoren, beispielsweise am Sattel, vorgesehen sein. Mit den Sensoren ist eine Auswerteeinrichtung verbunden. Zwischen der Auswerteeinrichtung und den Sensoren ist eine Datenübertragungseinrichtung vorgesehen, um die von den Sensoren gemessenen Sensordaten an die Auswerteeinrichtung zu übermitteln. Bei der Datenübertragungseinrichtung kann es sich um eine kabelgebundene oder kabellose Datenübertragungseinrichtung handeln. Bei der Auswerteeinrichtung kann es sich um einen externen Computer, wie einen PC, ein Tablet oder dergleichen, aber auch um ein Smartphone, oder einen Fahrradcomputer, handeln. Die von den Drucksensoren ermittelten Druckdaten können somit von der Auswerteeinrichtung ausgewertet werden. Dies erfolgt beispielsweise durch Vergleich der ermittelten Daten mit hinterlegten Daten, wie einem Schwellwert oder Zielwert. Die entsprechenden Schwell- oder Zielwerte können für eine Abhängigkeit von Fahrerdaten, wie das Gewicht, der Körpergröße etc. bestimmt, insbesondere berechnet, werden.

Bei einem Triathlonlenker ist es bevorzugt, dass die beiden Drucksensoren an den beiden Armauflagen, das heißt den Armpads, angeordnet werden. Insbesondere können die Drucksensoren zwischen zwei, insbesondere aus elastomeren Material vorgesehenen Auflagen angeordnet werden, um beispielsweise ein Verschmutzen oder Beschädigen zu vermeiden.

Bei einem Rennradlenker ist es bevorzugt, die beiden Sensoren, bei denen es sich insbesondere um Drucksensoren handelt, am Unterlenker des Rennradlenkers vorzusehen. Beim Rennradlenker sind die beiden Sensoren, insbesondere in dem Bereich angeordnet, in dem der Rennradlenker in der Aeroposition gegriffen wird.

Die von den Sensoren ermittelten Daten können von der Auswerteeinrichtung in einer einfachen Ausführungsform zunächst gesammelt und beispielsweise zeitlich ausgewertet werden. Bereits aus diesen Daten ist es möglich, beispielsweise Positionsänderungen des Fahrradfahrers zu ermitteln, um beispielsweise festzustellen, ob die gewünschte Aeroposition über den beobachteten Zeitraum korrekt eingehalten ist.

In besonders bevorzugter Ausführungsform weist die Auswerteeinrichtung ein Auswertemodul aus. Dieses dient zur Auswertung der empfangenen Sensordaten, wobei die Auswertung, insbesondere auf Basis von Parametern, erfolgt. Mit Hilfe des Auswertemoduls werden die ermittelten Daten somit unmittelbar ausgewertet, sodass einem Trainer oder dem Fahrradfahrer selbst beispielsweise unmittelbar angezeigt werden kann, ob er sich in der richtigen Aeroposition befindet. Der Fahrer oder Trainer erhält somit ein unmittelbares Feedback über die aktuelle, insbesondere ob diese der gewünschten Aeroposition entspricht oder wie stark diese beispielsweise von der gewünschten Position abweicht.

Beispielsweise wird aufgrund von Parametern, bei denen es sich insbesondere um Personendaten des Fahrradfahrers handelt, ein Schwellwert festgelegt bzw. berechnet. Befindet sich der von den Drucksensoren gemessene Wert oberhalb des Schwellwerts oder in einem vorgegebenen Bereich der Abweichung um einen festgelegten Schwellwert, kann dies als korrekte Aeroposition definiert werden. Bei einer entsprechend größeren Abweichung ist die Aeroposition nicht oder nicht korrekt eingenommen. Bei den personenbezogenen Parametern kann es insbesondere um Gewicht, Körpergröße etc. handeln.

Des Weiteren können bei der Auswertung durch das Auswertemodul als Parameter Fahrraddaten, wie die Rahmengröße, der Abstand zwischen Sattel und Lenker, die Überführung des Sattels und dergleichen berücksichtigt werden.

Da es mit dem erfindungsgemäßen System zur Sitzpositionsbestimmung möglich ist, die aktuelle Sitzposition zu bestimmen, ist es ferner möglich, als Parameter an dem Auswertemodul auch aktuelle Fahrdaten, wie beispielsweise die Steigung, die Geschwindigkeit, den Streckenverlauf, den Streckenuntergrund und dergleichen zu berücksichtigen.

Vorzugsweise weist die Auswerteeinrichtung ein Ausgabemodul auf und/oder ist mit einem Ausgabemodul verbunden. Beim Ausgabemodul kann es sich um einen Lautsprecher, einen Kopfhörer oder ein Display handeln. Insbesondere handelt es sich um das Display eines Fahrradcomputers, eines Smartphones, eines Tablets oder dergleichen. Die Ausgabe der Bewertung der Sitzposition erfolgt vorzugsweise über das Ausgabemodul. Hierbei ist es beispielsweise vorteilhaft, dass eine Ausgabe unmittelbar auf dem Fahrradcomputer erfolgt, sodass ein Sportler während des Trainings bereits ein Feedback über die aktuelle Sitzposition erhält. Hierdurch kann die korrekte aerodynamische Sitzposition besser trainiert werden.

Auch ist es möglich, in Abhängigkeit von Parametern, dem Sportler eine Sitzposition zu empfehlen. Eine entsprechende Empfehlung kann wiederrum über das Ausgabemodul, insbesondere das Display des Fahrradcomputers, erfolgen.

Des Weiteren ist es mit Hilfe des Auswertemoduls möglich, anhand der Sensordaten, insbesondere unter Berücksichtigung der Parameter, eine aktuelle Sitzposition zu bestimmen. Diese kann sodann über einen Zeitraum, wie eine Trainingsfahrt gemessen werden, sodass dem Sportler beispielsweise nach einem Training eine Auswertung zur Verfügung gestellt werden kann. Diese kann dem Sportler einen prozentualen Wert der richtigen Sitzposition mitteilen. Auch kann auf den Streckenverlauf bezogen mitgeteilt werden, wann die Sitzposition korrekt war und wann nicht. Gegebenenfalls kann auch eine Abweichung von der Sitzposition ermittelt und bewertet werden, wie stark die Abweichung beispielsweise ist. Des Weiteren ist es möglich einen Sitzpositionsplan über einen Zeitraum zu bestimmen. Dieser kann insbesondere in Abhängigkeit eines Streckenverlaufs bestimmt werden.

Auch beim Indoor-Training weist das erfindungsgemäße System zur Sitzpositionsbestimmung eines Fahrradfahrers große Vorteile auf. Es ist mit dem vorstehend beschriebenen System möglich eine korrekte Aeroposition zu trainieren. Des Weiteren ist es möglich Windeinflüsse zu simulieren, die auf der Sitzposition basieren. Beispielsweise kann hierdurch eine deutlich exaktere Auswertung der Daten erfolgen, da die Sitzposition einen erheblichen Einfluss hat. Dies ist mit heutigen Systemen nicht möglich. Beispielsweise erfolgt mit bekannten Programmen die Simulation einer bestimmten Strecke. Diese Simulation kann deutlich verbessert werden, wenn auch der Einfluss der Sitzposition berücksichtigt wird. Insofern ist es möglich auch im Indoor-Training eine realistischere Fahrsituation abzubilden und darzustellen.

Mit Hilfe des erfindungsgemäßen Systems zur Sitzpositionsbestimmung kann im Training die aktuelle Sitzposition erfasst und dem Sportler, insbesondere in Echtzeit über ein Display angezeigt werden. Auch ist die Ermittlung der Abweichung von Ziel-Daten bzw. Soll-Daten möglich, in dem ein Soll-Ist-Vergleich erfolgt. Insofern können beispielsweise prozentuale Abweichungen über einen Trainingszeitraum von einer Sollposition ermittelt und angezeigt, bzw. ausgewertet werden. Des Weiteren ist es möglich, insbesondere auf Grund der Geschwindigkeit, der Steigung, des Streckenverlaufs und dergleichen dem Fahrer eine Empfehlung zu geben, zu welchem Zeitpunkt er die Aeroposition einnehmen oder verlassen soll. Da die von den Sensoren ermittelten Daten gespeichert werden können, kann nach dem Training eine Analyse erfolgen. Ferner ist es durch die Echtzeitübertragung insbesondere im Indoor-Training möglich, die virtuelle Trainingsumgebung anzupassen.

In einer Weiterbildung der Erfindung ist es ferner möglich zusätzliche Sensoren vorzusehen und auszuwerten. Beispielsweise können ein oder mehrere Drucksensoren im Sattel integriert sein, sodass insbesondere ermittelt werden kann, in welchen Bereichen des Sattels welche Drücke auftreten.

In besonders bevorzugter Ausführungsform hat ein, insbesondere in die Auswerteeinrichtung integrierter Algorithmus, Inputparameter, die die Logik bestimmen, wie zum Beispiel Trainingsumgebung, Schwellenwerte oder Plandaten. Für die Output-Berechnung wird die Signalstärke des Sensors bzw. die Sensordaten genutzt und auf Basis des aktuellen Signals sowie vorzugsweise der Vergangenheitswerte eine Ableitung der Position vorgenommen. Im System mit zwei Sensoren wird darüber hinaus der Zusammenhang der Werte interpretiert und Schlüsse für das Output-Signal getroffen. Für die Anwendung im Outdoor-Training werden Kennzahlen auf Basis der erkannten aerodynamischen Segmente und der definierten Schwellenwerte ausgegeben. Für die Anwendung im Indoor-Training in Kombination mit einer Simulationssoftware, wird das Output Signal genutzt, um einen Faktor für die simulierte Geschwindigkeit zur Verfügung zu stellen, der zudem abhängig vom cdA-Wert (Windwiderstandswert) des gewählten Fahrrads und/oder Größe des Fahrers sein kann. Im Resultat fährt der Fahrer dann langsamer, wenn er nicht in der Aeroposition ist, aber schneller, wenn er in der Aeroposition ist - im Vergleich zu einem Fahrer, der das System nicht verwendet und positionsunabhängig immer gleichschnell fährt.

Nachfolgend wird die Erfindung anhand einer schematischen Darstellung näher erläutert.

In der schematischen Darstellung des erfindungsgemäßen Systems zur Sitzpositionsbestimmung sind schematisch zwei Drucksensoren 10, 12 dargestellt. Der

Drucksensor 10 kann hierbei beispielsweise in einer linken Armauflage und der Drucksensor 12 in einer rechten Armauflage integriert sein. Ebenso können die Drucksensoren 10, 12 in dem linken bzw. rechten Unterlenkerelement eines Rennradlenkers angeordnet sein. Über insbesondere kabellose Datenübertragungseinrichtungen 14, 16 werden die von den Sensoren 10, 12 gemessenen Daten an einen Fahrradcomputer 18, ein Smartphone, ein Tablet oder dergleichen übertragen. Ferner können, insbesondere auch kabellos, weitere Daten über einen Datenübertragungskanal 20 an den Fahrradcomputer 18 oder dergleichen übertragen werden. Über diesen Datenübertragungskanal 20 können dem Fahrradcomputer 18 oder dergleichen auch Parameter übermittelt werden. Derartige Parameter, bei denen es sich beispielsweise um personenbezogene Daten, Fahrraddaten, Streckendaten oder dergleichen handelt, können von dem in dem Fahrradcomputer 18 integrierten Auswertemodul bei der Bestimmung der Sitzposition berücksichtigt werden.

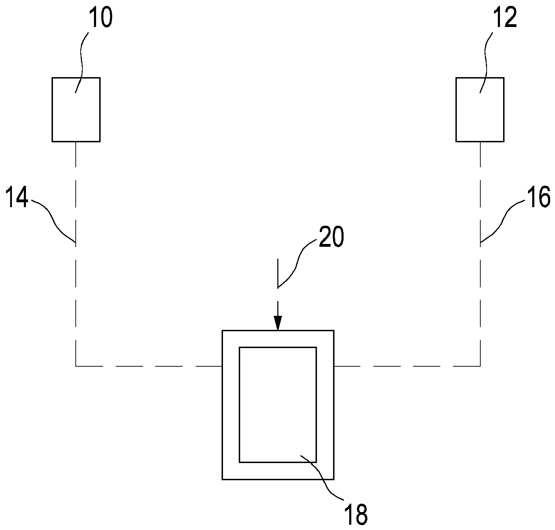

## Patentansprüche

1. System zur Sitzpositionsbestimmung eines Fahrradfahrers, mit
zwei an einem Fahrradlenkerelement angeordneten Sensoren (10,12), insbesondere Drucksensoren,
einer mit den Sensoren (10,12) verbundenen Auswerteeinrichtung (18) und
einer mit den Sensoren (10, 12) und der Auswerteeinrichtung (18) verbundenen Datenübertragungseinrichtung (14, 16) zur Übertragung von gemessenen Sensordaten an die Auswerteeinrichtung (18).

2. System zur Sitzpositionsbestimmung nach Anspruch 1, **dadurch gekennzeichnet, dass** es sich bei den Fahrradlenkerelementen um die beiden Armauflagen eines Triathlonlenkers handelt.

3. System zur Sitzpositionsbestimmung nach Anspruch 1, **dadurch gekennzeichnet, dass** es bei den Fahrradlenkerelementen um die beiden Unterlenkerelemente eines Rennradlenkers handelt.

4. System zur Sitzpositionsbestimmung nach einem der Ansprüche 1 bis 3, **dadurch gekennzeichnet, dass** die Datenübertragungseinrichtung kabellos und/oder kabelgebunden ist.

5. System zur Sitzpositionsbestimmung nach einem der Ansprüche 1 bis 4, **dadurch gekennzeichnet, dass** die Auswerteeinrichtung (18) einen Fahrradcomputer und/oder einen Computer und/oder ein Smartphone und/oder ein Tablet umfasst.

6. System zur Sitzpositionsbestimmung nach einem der Ansprüche 1 bis 5, **dadurch gekennzeichnet, dass** die Auswerteeinrichtung (18) ein Auswertemodul zur Auswertung der empfangenen Sensordaten aufweist, wobei das Auswertemodul insbesondere auf Basis von Parametern eine Bewertung der Sitzposition vornimmt.

7. System zur Sitzpositionsbestimmung nach Anspruch 6, **dadurch gekennzeichnet, dass** die Parameter Personendaten des Benutzers, wie Gewicht und Körpergröße, umfassen.

8. System zur Sitzpositionsbestimmung nach einem der Ansprüche 6 oder 7, **dadurch gekennzeichnet, dass** die Parameter Fahrradparameter, wie Rahmengröße, den Abstand zwischen Sattel und Lenker umfassen.

9. System zur Sitzpositionsbestimmung nach einem der Ansprüche 6 bis 8, **dadurch gekennzeichnet, dass** die Parameter aktuelle Fahrdaten, wie Geschwindigkeit, Steigung, Streckenverlauf, umfassen.

10. System zur Sitzpositionsbestimmung nach einem der Ansprüche 1 bis 9, **dadurch gekennzeichnet, dass** die Auswerteeinrichtung ein Ausgabemodul aufweist und/oder mit einem Ausgabemodul verbunden ist.

11. System zur Sitzpositionsbestimmung nach Anspruch 10, **dadurch gekennzeichnet, dass** das Ausgabemodul ein Lautsprecher und/oder einen Kopfhörer und/oder ein Display ist.

12. System zur Sitzpositionsbestimmung nach einem der Ansprüche 6 bis 11, **dadurch gekennzeichnet, dass** die Ausgabe der Bewertung der Sitzposition über das Ausgabemodul erfolgt.

13. System zur Sitzpositionsbestimmung nach einem der Ansprüche 6 bis 12, **dadurch gekennzeichnet, dass** die Bewertung der Sitzposition eine Empfehlung für die einzunehmende Sitzposition umfasst.

14. System zur Sitzpositionsbestimmung nach einem der Ansprüche 6 bis 13, **dadurch gekennzeichnet, dass** das Auswertemodul anhand der Sensordaten und der Parameter eine aktuelle Sitzposition bestimmt und/oder über einen Zeitraum anteilig unterschiedliche Sitzpositionen bestimmt und/oder Abweichungen einer aktuellen Sitzposition von einer Soll-Sitzposition bestimmt und/oder einen Sitzpositionsplan über einen Zeitraum definiert.
